# EUROPÄISCHE PATENTSCHRIFT

(11) **EP 0 676 441 B1**
(45) Veröffentlichungstag und Bekanntmachung des Hinweises auf die Patenterteilung: **05.01.2000**
(21) Anmeldenummer: 95102765.5
(22) Anmeldetag: 27.02.1995
(51) Int. Cl.: C08J 11/06, C08J 5/04

(54) **Verfahren zur Wiederaufarbeitung eines faserverstärkten Thermoplast-Materials**
Process for recycling a fibre-reinforced thermoplastic material
Procédé de récyclage d'un matériau thermoplastique renforcé par des fibres

(30) Priorität: 10.03.1994 DE 4408089
(43) Veröffentlichungstag der Anmeldung: 11.10.1995
(73) Patentinhaber: Ticona GmbH, 65451 Kelsterbach (DE)
(72) Erfinder: Wernicke, Michael, Dr., D-65779 Kelkheim (DE); Skaletz, Detlef, Dr., D-55128 Mainz (DE)

(56) Entgegenhaltungen:
- EP-A- 0 548 696
- GB-A- 1 367 960
- DATABASE WPI Week 9411 Derwent Publications Ltd., London, GB; AN 94-088947 & JP-A-06 039 834 (MITSUBISHI PETROCHEMICAL CO LTD) , 15.Februar 1994
- CHEMICAL ABSTRACTS, vol. 117, no. 26, 28.Dezember 1992 Columbus, Ohio, US; abstract no. 252934y, Seite 79;

## Beschreibung

Die Erfindung betrifft ein Verfahren zur Wiederaufarbeitung eines ThermoplastMaterials, das kurzglasfaserverstärkt ist.

Faserverstärkte Thermoplaste werden allgemein zur Herstellung von Formkörpern mit stabilen mechanischen Eigenschaften, insbesondere mittels Spritzguß, verwendet. Dabei überwiegt die Verwendung von Thermoplasten, die mit Kurzglasfasern, d.h. Glasfasern mit Faserlängen bis ca. 500 µm, verstärkt sind.

Die Wiederaufarbeitung gebrauchter Formkörper oder von Produktionsabfällen aus kurzglasfaserverstärkten Thermoplasten erfolgt üblicherweise durch Zerkleinerung und neue Verformung, z.B. durch Spritzgießen. Durch die Wiederverarbeitung verschlechtern sich jedoch die mechanischen Eigenschaften der Thermoplast-Materialien, weil sich Faserlängen und auch die Faserverteilung ändern (vgl. Chemical Abstracts Vol. 91 (1979), 158 641 y).

Der erneute Einsatz des wieder verarbeiteten Materials erfolgt deshalb überwiegend für solche Zwecke, die geringe Anforderungen an die mechanischen Eigenschaften stellen. Bekannt ist auch der Zusatz weiterer Füllstoffe, z.B. Holzmehl (DE-OS 4 016 410), oder von Bindemitteln wie Novolaken (EP 0 518 004).

In einem anderen Verfahren (JP-6039834) wird zerkleinertes Thermoplastmaterial, das auch Glasfasern enthalten kann, mit Thermoplastpulver und Verstärkungsfasern (z.B. Glasfasern) vermischt und durch Heißpressen thermoplastisch verformt.

Die gleichzeitige Verwendung von kurzen Glasfasern (Länge ca. 1,5-50 mm) und langen Glasfasern (Länge größer als die der kurzen Glasfasern) in einem Thermoplastmaterial wird in GB-1 367 960 beschrieben. Durch die Zugabe der kurzen Glasfasern soll dabei die Festigkeit des langglasfaserverstärkten Materials erhöht werden.

Der Erfindung liegt das Problem zugrunde, ein Verfahren zur Wiederaufarbeitung von kurzglasfaserverstärkten Thermoplasten zu entwickeln, das es ermöglicht, aus dem Recyclat (z.B. gebrauchte Formkörper oder Produktionsabfälle) wieder Formkörper mit mechanischen Eigenschaften herzustellen, die denen der Neuware mindestens gleichwertig sind.

Es wurde nun ein Verfahren zur Wiederaufarbeitung von kurzglasfaserverstärktem Thermoplast-Material gefunden, daß dadurch gekennzeichnet ist, daß man kurzglasfaserverstärktes Thermoplast-Material zerkleinert und 100 Gew.-Teile des erhaltenen zerkleinerten Materials mit etwa 11 bis etwa 43 Gew.-Teilen von Schnitzeln eines damit in der Schmelze mischbaren Thermoplast-Materials, das aber langglasfaserverstärkt ist, vermischt und man das Gemisch thermoplastisch verformt. Das zunächst erhaltene Gemisch enthält 10 bis 30 Gew.-% langglasfaserverstärkten Thermoplast, und 70 bis 90 Gew.-% recyclierten kurzglasfaserverstärkten Thermoplast. Das üblicherweise verwendete kurzglasfaserverstärkte Thermoplastmaterial enthält 20 bis 40 Gew.-% Glasfaser mit einer Faserlänge von 10 bis 400 µm und einem Faserdurchmesser von 10 bis 25 µm.

Dem Fachmann ist bekannt, welche Thermoplasten in der Schmelze miteinander mischbar sind. Beispielsweise sind Polyamide und Nylon 6 mischbar, Polypropylen ist mit Polypropylen anderer Taktizität und anderem Molgewicht oder mit den Mischpolymerisaten EPDM und EPM mischbar. Polyethylen ist nicht mischbar mit Polypropylen, wohl aber mit Polyethylen anderen Molgewichts (z.B. HDPE mit LDPE). Es ist bevorzugt, wenn der Thermoplast des langglasfaserverstärkten und des kurzglasfaserverstärkten Materials gleich ist.

Das Verfahren zum Zerkleinern des zu recyclierenden Thermoplastmaterials, z.B. gebrauchte Formkörper oder Produktionsabfälle, ist nicht kritisch. Das Zerkleinern kann beispielsweise durch Zermahlen oder Zerschneiden erfolgen. In den meisten Fällen reicht es aus, das Material auf eine Größe von 1 bis 30 mm zu zerkleinern.

Das zugemischte langglasfaserverstärkte Thermoplast-Material wird vorzugsweise durch Schmelz-Pultrusion von imprägnierten Endlosfasern hergestellt, die dann auf Granulatlänge zugeschnitten werden. Vorzugsweise enthält der langglasfaserverstärkte Thermoplast 30 bis 60 Gew.-% Glasfasern mit einem Faserdurchmesser von 10 bis 25 µm. Die Faserlänge, bzw. Länge der Granulatkörper beträgt vorzugsweise 5 bis 15 mm.

Der Fasergehalt des wiederaufzuarbeitenden Materials soll sich nicht wesentlich ändern. Der Fasergehalt des des Gemisches soll daher das 0,95 bis 1,05fache als Fasergehalts des kurzglasfaserverstärkten Thermoplastmaterials betragen.

Um den Gehalt des Gemisches an thermoplastischem Material einzustellen, kann zusätzlich ein unverstärkter Thermoplast zugegeben werden, der ebenfalls in der Schmelze mit dem kurzglasfaserverstärkten Thermoplast mischbar ist und insbesondere der gleiche Thermoplast ist.

Es ist vorteilhaft, wenn ein Gemisch verarbeitet wird, dessen Thermoplastgehalt (unverstärkter Thermoplastanteil im langglasfaserverstärkten Material und Anteil im kurzglasfaserverstärkten Material) mindestens 70 Gew.-% beträgt. Das erfindungsgemäße Verfahren ist nicht auf ein bestimmtes Thermoplastmaterial beschränkt. Bevorzugt wird es zur Wiederaufarbeitung von Polyolefinen, insbesondere Polypropylen, eingesetzt.

Mit dem erfindungsgemäßen Verfahren ist es möglich, den bereits benutzten glasfaserverstärkten Thermoplast erneut für Formkörper u.ä. mit besonderen Anforderungen an mechanische Eigenschaften und Thermostabilität zu verwenden. Überraschenderweise läßt sich ein gleiches oder höheres Niveau der mechanischen Eigenschaften und der Thermostabilität erreichen, selbst wenn der Glasfasergehalt konstant gehalten wird.

Das erfindungsgemäße Verfahren wird durch die nachfolgenden Beispiele näher erläutert.

### Beispiel 1:

Gebrauchte Formkörper und produktionsbedingte Abfälle eines handelsüblichen faserverstärkten Polypropylens (Schmelzindex MFI 230/5 = 55 g/10 min) mit 30 Gew.-% Glasfasern einer Faserlänge von 10-400 µm und einem Faserdurchmesser von 10-25 µm wurden in einer Schneidmühle zu Teilchen von 1-30 mm Größe gemahlen.

In einem Taumelmischer wurden das gemahlene Material mit jeweils 10, 20 und 30 Gew.-% eines handelsüblichen langglasfaserverstärkten Polypropylens vermischt. Ferner wurde soviel eines Polypropylens der Dichte 0,907 g/cm³ und dem Schmelzindex MFI 230/5 von 55 g/10 min zugesetzt, daß die Thermoplastmischung insgesamt etwa 30 Gew.-% Glasfasern enthielt.

Das langglasfaserverstärkte Polypropylen enthielt 40 Gew.-% Glasfasern von 10 mm Länge und 10-25 µm Durchmesser und war durch Schmelz-Pultrusion hergestellt.

Aus dieser Mischung wurden im Spritzgußverfahren Stapelkästen gefertigt und aus diesen Proben zur Ermittlung der mechanischen Eigenschaften und der Thermostabilität geschnitten.

Zu Vergleichszwecken wurden analog Stapelkästen ausschließlich aus gebrauchtem regranulierten Material (ohne Zumischung) gefertigt und aus diesen ebenfalls Proben entnommen.
Das Ergebnis der Prüfungen ist in Tabelle 1 dargestellt.

### Materialerläuterung:

- Material V 1 : PP-KG - Bauteil aus frischem Material (Vergleichsversuch)
- Material WV-0 : PP-KF - Bauteil aus gemahlenem Material V1 (Vergleichsversuch)
- Material WV-10 : PP-KG erfindungsgemäß mit 10 Gew.-% PP-LG
- Material WV-20 : PP-KG erfindungsgemäß mit 20 Gew.-% PP-LG
- Material WV-30 : PP-KG erfindungsgemäß mit 30 Gew.-% PP-LG
Dabei bedeuten:
PP-KG : Polypropylen mit Kurzglasfasern verstärkt
PP-LG : Polypropylen mit Langglasfasern verstärkt.

### Beispiel 2:

Gebrauchte Formkörper und produktionsbedingte Abfälle eines handelsüblichen Polypropylens (Schmelzindex MFI 230/5 = 4.5 g/10 min) mit 30 Gew.-% Kurzglasfasern wurden analog Beispiel 1 regranuliert, gemischt und verarbeitet. Das Ergebnis der Prüfungen ist in Tabelle 2 dargestellt.

**Tabelle 1**

| Material | | | | | | |
|---|---|---|---|---|---|---|
| Eigenschaft | Norm | V 1 | WV-0 | WV-10 | WV-20 | WV-30 |
| Zugfestigkeit (MPa) | DIN 53455 | 46,35 | 40,08 | 41,03 | 47,20 | 48,28 |
| Reißdehnung (%) | DIN 53455 | 2,37 | 2,38 | 2,01 | 2,54 | 2,21 |
| E-Modul (MPa) | DIN 53455 | 3757,5 | 3510 | 3685 | 3860 | 3945 |
| Durchstoßarbeit J/mm | DIN 53443/2 | 1,58 | 1,32 | 1,41 | 1,53 | 1,84 |
| Oxidationsonset (°C) | | 242,2 | 246,6 | 251,5 | 257,6 | 260,4 |
| Glasfasergegehalt(Gew.-%) | | 31,0 | 31,3 | 31,2 | 30,6 | 30,5 |

**Tabelle 2**

| Material | | | | | | |
|---|---|---|---|---|---|---|
| Eigenschaft | Norm | V 1 | WV-0 | WV-10 | WV-20 | WV-30 |
| Zugfestigkeit (MPa) | DIN 53455 | 51,85 | 47,53 | 48,38 | 49,95 | 51,20 |
| Reißdehnung (%) | DIN 53455 | 2,83 | 2,77 | 2,69 | 2,61 | 2,46 |
| E-Modul (MPa) | DIN 53455 | 3902,5 | 3995 | 4025 | 4010 | 4235 |
| Durchstoßarbeit J/mm | DIN 53443/2 | 2,11 | 2,04 | 2,10 | 2,07 | 2,41 |
| Oxidationsonset (°C) | | 246,5 | 246,8 | 253,7 | 259,4 | 261,4 |
| Glasfasergegehalt(Gew.-%) | | 30,8 | 30,7 | 30,7 | 31,1 | 31,6 |

## Patentansprüche

1. Verfahren zur Wiederaufarbeitung eines kurzglasfaserverstärkten Thermoplastmaterials, dadurch gekennzeichnet, daß man kurzglasfaserverstärktes Thermoplastmaterial zerkleinert und 100 Gew.-Teile des erhaltenen zerkleinerten Materials mit 11-43 Gew.-Teilen von Schnitzeln eines damit in der Schmelze mischbaren Thermoplastmaterials, das aber langglasfaserverstärkt ist, vermischt und man das Gemisch thermoplastisch verformt, wobei die Kurzglasfasern eine Faserlänge von 10 bis 400 µm und die Langglasfasern eine Faserlänge von 5 bis 15 mm aufweisen.

2. Verfahren gemäß Anspruch 1, dadurch gekennzeichnet, daß das kurzglasfaserverstärkte und/oder langglasfaserverstärkte Thermoplastmaterial aus Polyolefin, insbesondere Polypropylen besteht.

3. Verfahren nach Anspruch 1, dadurch gekennzeichnet, daß man ein kurzglasfaserverstärktes Thermoplastmaterial zerkleinert, das 20 - 40 Gew.-% Glasfasern mit einer Faserlänge von 10 bis 400 µm und einem Faserdurchmesser von 10 bis 25 µm enthält.

4. Verfahren gemäß Anspruch 1, dadurch gekennzeichnet, daß das kurzglasfaserverstärkte Thermoplastmaterial auf eine Teilchengröße von 1 - 30 mm zerkleinert wird.

5. Verfahren gemäß Anspruch 1, dadurch gekennzeichnet, daß das langglasfaserverstärkte Thermoplastmaterial aus durch Schmelz-Pultrusion imprägnierten Endlosfasern besteht, die auf Granulatlänge geschnitten werden.

6. Verfahren gemäß Anspruch 1 oder 5, dadurch gekennzeichnet, daß das langglasfaserverstärkte Thermoplastmaterial 30 - 60 Gew.-% Glasfasern mit einem Faserdurchmesser von 10 - 25 µm enthält.

7. Verfahren gemäß Anspruch 1, dadurch gekennzeichnet, daß der Thermoplastmischung zusätzlich ein unverstärkter Thermoplast zugegeben wird, der in der Schmelze mit dem Thermoplasten des kurzglasfaserverstärkten und des langglasfaserverstärkten Materials mischbar ist.

8. Verfahren nach Anspruch 1 oder 7, dadurch gekennzeichnet, daß der Thermoplastgehalt des erhaltenen Gemisches mindestens 70 Gew.-% beträgt.

9. Verfahren nach Anspruch 1, dadurch gekennzeichnet, daß der Faseranteil des erhaltenen Gemisches das 0,95 bis 1,05-fache des Faseranteils des wiederaufzuarbeitenden kurzglasfaserverstärkten Thermoplastmaterials beträgt.

## Claims

1. A process for recycling a short glass fiber reinforced thermoplastic material, which comprises comminuting short glass fiber reinforced thermoplastic material, mixing 100 parts by weight of the resulting comminuted material with 11-43 parts by weight of chips of a thermoplastic material which is miscible therewith in the melt but which is long glass fiber reinforced, and forming the mixture thermoplastically, the short glass fiber being from 10 to 400 µm in length and the long glass fiber being from 5 to 15 mm in length.

2. The process of claim 1 wherein the short glass fiber reinforced and/or long glass fiber reinforced thermoplastic material comprises polyolefin, in particular polypropylene.

3. The process of claim 1 wherein the short glass fiber reinforced thermoplastic material which is comminuted contains 20-40% by weight of glass fiber from 10 to 400 µm in length and from 10 to 25 µm in diameter.

4. The process of claim 1 wherein the short glass fiber reinforced thermoplastic material is comminuted to a particle size of 1-30 mm.

5. The process of claim 1 wherein the long glass fiber reinforced thermoplastic material comprises continuous filament fiber impregnated by melt pultrusion and cut to granule length.

6. The process of claim 1 or 5 wherein the long glass fiber reinforced thermoplastic contains 30-60% by weight of glass fiber 10-25 µm in diameter.

7. The process of claim 1 wherein the thermoplastic mixture has additionally added to it an unreinforced thermoplastic which is miscible in the melt with the thermoplastic of the short glass fiber reinforced and of the long glass fiber reinforced material.

8. The process of claim 1 or 7 wherein the thermoplastic content of the mixture obtained is at least 70% by weight.

9. The process of claim 1 wherein the fiber content of the mixture obtained is from 0.95 to 1.05 times the fiber content of the short glass fiber reinforced thermoplastic material which is to be recycled.

## Revendications

1. Procédé de retraitement d'un matériau thermoplastique renforcé de fibres de verre courtes, caractérisé en ce qu'on fractionne le matériau thermoplastique renforcé de fibres de verre courtes et en ce qu'on mélange 100 parties en poids du matériau fractionné obtenu avec 11-43 parties en poids de copeaux d'un matériau thermoplastique miscible en fusion avec lui, qui est cependant renforcé de fibres de verre longues, et en ce qu'on met en forme le mélange de manière thermoplastique, les fibres de verre courtes présentant une longueur de fibres de 10 à 400 µm et les fibres de verre longues présentant une longueur de fibres de 5 à 15 mm.

2. Procédé suivant la revendication 1, caractérisé en ce que le matériau thermoplastique renforcé de fibres de verre courtes et/ou renforcé de fibres de verre longues est constitué de polyoléfine, en particulier de polypropylène.

3. Procédé suivant la revendication 1, caractérisé en ce qu'on fractionne un matériau thermoplastique renforcé de fibres de verre courtes, qui contient 20-40% en poids de fibres de verre avec une longueur de fibres de 10 à 400 µm et un diamètre de fibres de 10 à 25 µm.

4. Procédé suivant la revendication 1, caractérisé en ce que le matériau thermoplastique renforcé de fibres de verre courtes est fractionné à une taille particulaire de 1-30 mm.

5. Procédé suivant la revendication 1, caractérisé en ce que le matériau thermoplastique renforcé de fibres de verre longues est constitué de fibres continues imprégnées par fusion-pultrusion, qui sont ensuite coupées à la longueur du granulat.

6. Procédé suivant la revendication 1 ou 5, caractérisé en ce que le matériau thermoplastique renforcé de fibres de verre longues contient 30-60% en poids de fibres de verre avec un diamètre de fibres de 10-25 µm.

7. Procédé suivant la revendication 1, caractérisé en ce qu'un thermoplastique non renforcé supplémentaire est ajouté au mélange thermoplastique, qui est miscible en fusion avec le thermoplastique du matériau renforcé de fibres de verre courtes et renforcé de fibres de verre longues.

8. Procédé suivant la revendication 1 ou 7, caractérisé en ce que la teneur en thermoplastique du mélange obtenu s'élève au moins à 70% en poids.

9. Procédé suivant la revendication 1, caractérisé en ce que la proportion de fibres du mélange obtenu est 0,95 à 1,05 fois la proportion de fibres du matériau thermoplastique renforcé de fibres de verre courtes à retraiter.
